# EUROPEAN PATENT SPECIFICATION

(11) **EP 4 232 373 B1**
(45) Date of publication and mention of the grant of the patent: **21.08.2024**
(21) Application number: 21798321.2
(22) Date of filing: 19.10.2021
(51) Int. Cl.: B65D 75/26, B65D 81/03

(54) **SACK FOR MAILING OR DUNNAGE AND METHOD FOR PRODUCING THE SAME**
SACK FÜR VERSAND- ODER PACKMATERIAL UND HERSTELLUNGSVERFAHREN
SAC POUR LE COURRIER OU LE FARDAGE ET SON PROCÉDÉ DE PRODUCTION

(30) Priority: 20.10.2020 GB 202016631
(43) Date of publication of application: 30.08.2023
(73) Proprietor: DS Smith Plc, London W2 1DL (GB)
(72) Inventor: TURNER, Russell, Monmouth NP25 4LZ (GB)
(74) Representative: Vanzini, Christian
(86) International application number: PCT/EP2021/078908
(87) International publication number: WO 2022/084293

(56) References cited:
- EP-A1- 1 170 225
- EP-A1- 1 323 642
- EP-A1- 2 743 198
- EP-A1- 2 930 123
- EP-A2- 0 586 232
- DE-A1- 4 219 258
- US-A- 4 193 499
- US-A1- 2018 290 806

## Description

The present invention relates to a sack for mailing one or more items or for dunnage, and the production method thereof.

### BACKGROUND ART

Padded mailing sacks are typically made from sack Kraft and Machine Glaze papers, both consisting of up to 95% virgin fibre, combined with single use plastic bubble wrap lining.

The materials of most of these sacks cannot be manually separated, making them not recyclable in the home waste stream.

Where they can be separated, substantial consumer responsibility and behavioral change is required.

Sustainable padded sacks do exist, but the price gap with plastic based ones is so large that a big environmental and financial commitment is required for an e-tailer to opt for these.

Unpadded mailing sacks can be paper-based, in which case they are typically manufactured from sack Kraft and Machine Glaze papers. Recycled fibre alternatives lack the rigidity and durability required.

Alternatively, unpadded mailing sacks can be produced from heavy gauge single use plastics, in which case the product is not recyclable at household level (kerbside) and tends to end up being incinerated or landfilled.

Accordingly, the sustainability of the materials hitherto used for mailing sacks is quite problematic.

Furthermore, the bubble wrap used for padded mailers is typically shipped in reels of bubble plastic and converted into a padded mailer or supplied in a pre-made fixed size padded format to the production or filling location. The economic and environmental costs of transporting trapped air can be substantial.

After insertion of the item(s) to be shipped, all known mailers have a certain amount of air in them that gets trapped around the item(s), which makes their volumetric cube / transportable size larger than necessary.

The filling of e-commerce mailers is often a manual process. Opening, filling and closure of the pre-made mailers can cause repetitive strain injury (RSI).

Hence, also the sustainability of the hitherto used production processes of mailing sacks is quite problematic.

In order to ship single or multiple items of various product types with different performance requirements, e-tailers require many different mailer sizes and formats. However, e-commerce machines producing sacks typically produce solely one type thereof : padded or unpadded, for mailing or for dunnage. As a result, the e-tailers require multiple machines and/or supplies of different formats (resulting in stock) to enable optimal shipper selection. Alternatively, they opt for a limited range of formats and standard sizes and accept a non-optimal fit for their products, resulting in excessive packaging and extra transportation costs/environmental footprint.

Hence, even the equipment presently used for the production of known mailers brings about several problems.

Finally, due to the diversity in the range of items dispatched through the e-commerce channel, e-tailers often revert to using over-sized generic cartons.

Consequently, many parcels of this kind need to be filled with dunnage to protect the shipped item from movement and damage. Dunnage systems typically use lots of paper, plastic pellets or inflated plastic bags of air.

Hence, the use of generic cartons in the e-commerce supply chain produces a lot of dunnage that is often not sustainable and needs to be additionally disposed of.

US 2018/290806 A1 discloses a sack for mailing at least one item formed by two facing panels sealed along the perimeter, wherein each panel is at least one-ply and wherein said ply includes a layer of paper and a film of an extruded or laminated polymer covering one face of said layer of paper.

DE 42 19 258 A1 discloses the same kind of sack whereby each panel is two-ply with an inner ply and an outer ply, wherein said outer ply includes a layer of paper and a film of an extruded or laminated polymer and said inner ply includes a film of polymer, wherein a plurality of hermetically sealed individual air pockets are trapped between said inner and outer plies.

One object of the present invention is to overcome the above-captioned drawbacks of the prior art.

### SUMMARY OF THE INVENTION

According to the present invention, this object is achieved by means of a sack according to claim 1.

Preferably, said polymer is biodegradable, and/or said paper is recycled, and/or said film has a thickness of 3 to 250 µm.

Advantageously, the sack of the invention has a substantially rectangular perimeter and one corner thereof is not completely sealed, so that the two panels are detached and manually peelable in correspondence of said corner.

The above-disclosed mailing sack may be produced by a method comprising the steps of:
- creating an envelope formed by two facing panels attached along one side,
- inserting said at least one item between said two facing panels,
- sealing said two facing panels along a perimeter end portion, and
- extracting air trapped between said at least one item and said two facing panels.

Each ply of the mailing sack according to the invention, is thus a combination of a preferably recycled lightweight paper, with a thin film of a preferably biodegradable extruded or laminated polymer. E.g., such polymer may be selected in the group consisting of modified polyvinyl alcohol-based polymers and polysaccharide-based biodegradable polymers with thermosetting behaviours and mixtures thereof.

This hybrid layered material has all the benefits of its constituents, because, on one hand, plastic renders it heat-sealable, air-tight, super-thin/light-weight, and malleable, and, on the other hand, paper renders it printable, somewhat water-resistant, low cost, kerbside recyclable and so on.

In sum, this hybrid material is extremely strong and resistant to puncture and tear. The unique biodegradability of the plastic used makes the material kerbside recyclable.

The total volume of material used can be significantly lower (i.e. at absolute minimum) compared to what would be required to achieve the same level of performance with a single-material alternative.

Importantly, the hybrid material can compete on price with single-use plastics and kraft paper solutions, enabling it to become mainstream.

The use of the above hybrid material allows in particular to manufacture three generic mailer or mailing sack options and one dunnage sack, each with different properties depending on their required performance, in a single system replacing multiple stand-alone operations.

This enables customers to produce different sack variations, in various pack sizes, on one single machine with fast switch-over times between formats.

The present invention thus allows the flexible creation of a range of fully sustainable, biodegradable padded and unpadded mailing sacks that provide optimal protection of the shipped items with the minimum packaging volume feasible in the e-commerce supply chain.

In particular, the above-captioned four generic options of sack are:
1) a 2-ply padded sack for items requiring a high degree of sustained cushioning protection and puncture- and moisture-resistance;
2) a 2-ply non-padded sack for items that require a high protection against puncture and moisture, but do not need cushioning.

### BRIEF DESCRIPTION OF THE DRAWINGS

Further advantages and features of the present invention will be apparent from the following detailed description, given by way of non-limiting example with reference to the appended drawings, in which:
figure 1 is a perspective view of a mailing sack according to the invention,
figure 2 is a schematic perspective view of an equipment for the production of the mailing sack of figure 1,
figure 3 is a section view along line III-III of figure 2,
figure 4 is a perspective view of a detail of the mailing sack of figure 1,
figure 5 is a section view along line V-V of figure 1 during the packaging of an item to be shipped within the mailing sack of figure 1,
figure 6 is a section view along line VI-VI of figure 1 at the end of the packaging of the item to be shipped,
figure 7 is a section view corresponding to figure 5 of a second embodiment of a mailing sack which is not according to the invention,
figure 8 is a section view corresponding to figure 5 of a third embodiment of a mailing sack which is not according to the invention,
figure 9 is a section view corresponding to figure 6 of the third embodiment of a mailing sack which is not according to the invention, and
figure 10 is a section view corresponding to figure 5 of a fourth embodiment of a dunnage sack which is not according to the invention.

### DETAILED DESCRIPTION

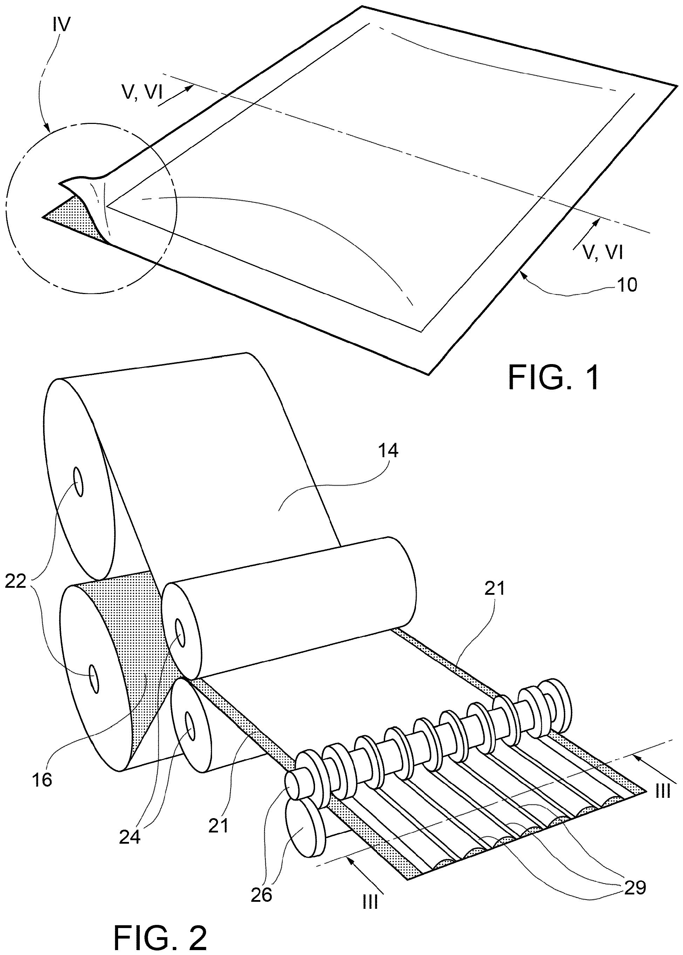

A mailing sack 10 for shipping at least one item 12 is formed (see figures 1, 4, 5 and 6) by two facing panels which are joined, preferably by heat-sealing or alternatively by ultra-sound fusing, along the perimeter. The sack 10 has a substantially rectangular perimeter, but in not illustrated embodiments might have any different suitable shape. Each panel is two-ply with an inner ply 14 and an outer ply 16. The inner ply 14 includes a layer 18 of preferably recycled paper having a grammage or 35 to 450 g/m² and a film 20 of a preferably biodegradable extruded or laminated polymer. The outer ply 16 includes a layer 18 of preferably recycled paper having a grammage 35 to 450 g/m² and a film 20 of a preferably biodegradable extruded or laminated polymer.

Hence, the two plies 14, 16 have a similar structure, but the outer ply 16 has a heavier paper layer 18, because it needs to have a higher durability, puncture- and water-resistance.

Furthermore, the outer ply 16 can optionally be made water-resistant by applying a barrier coating (varnish), and/or be printed upon, eliminating the need for labels with associated backing paper and offering the possibility for branded communication.

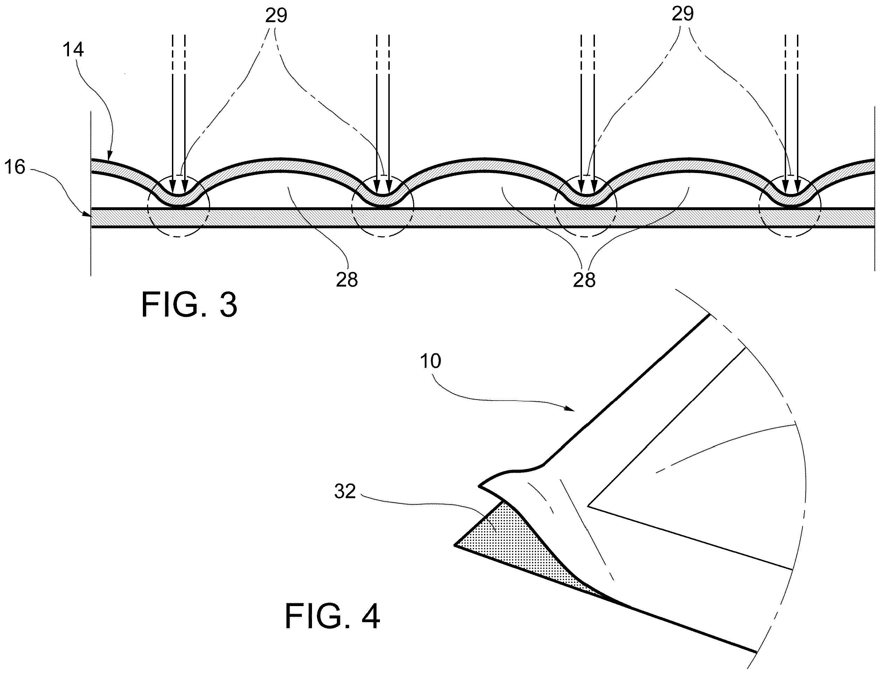

The mailing sack 10 is produced (figure 2) by unwinding from respective reels 22 the plies 14, 16, of which the outer ply 16 is slightly wider. Pressure rollers 24 draw together the plies 14, 16, whose plastic films 20 are in contact with each other, except narrow side strips 21 of the film 20 of the ply 16 that remain exposed to the external environment due to the different widths of the plies 14, 16. Successively, further shaped rollers 26 produce a plurality of hermetically sealed individual air pockets 28 trapped between the inner and outer plies 14, 16 (figure 3) which are attached to each other in correspondence of the separation regions 29 between adjacent air pockets 28. If necessary, additional air may be blown prior to the sealing of the pockets 28, whose number and size may be chosen as desired. Should one pocket 28 get punctured, the other pockets 28 will remain intact, so that the global cushioning function is maintained.

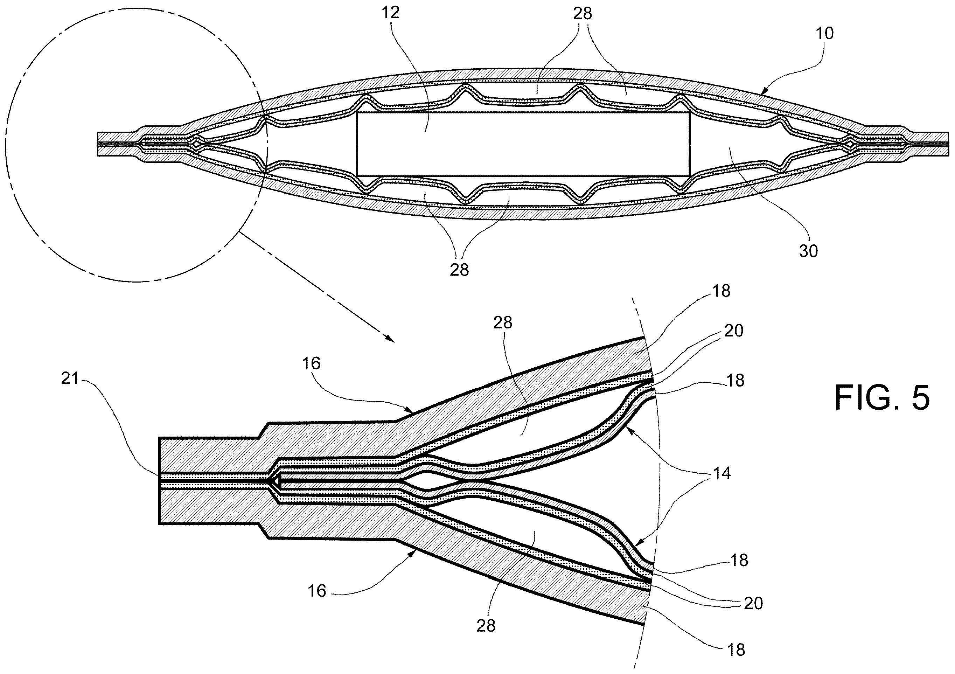

The joined together plies 14, 16 are then conventionally cut to the size requested for the sack 10 and folded, so that an envelope is formed by two facing panels attached along one side. The item 12 to be shipped is inserted within the envelope between the two facing panels, which are sealed along the side strips 21, respective lengths of which are adjacent to each other after folding (figure 5).

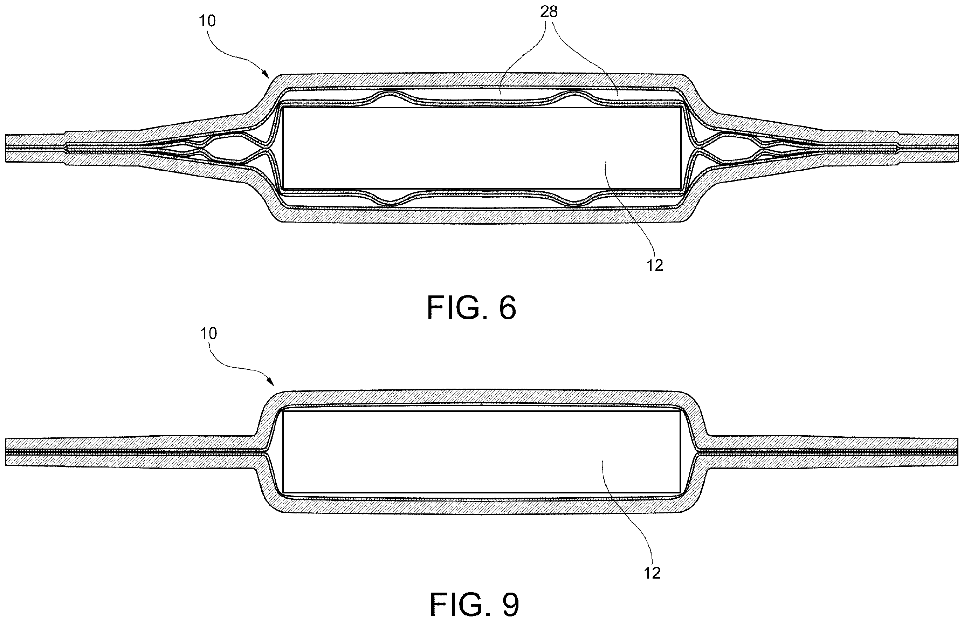

Prior to the final heat seal closure of the sack 10, excess air 30 trapped between the item 12 and the two facing panels is extracted (figure 6), creating the smallest possible volumetric size and rendering very flexible the sack 10 containing the item 12 to be shipped.

Figure 4 illustrates that one corner 32 of the sack 10 is not completely sealed, so that the two panels are therein detached and manually peelable by the addressee of the shipment who can thus easily open the sack 10, when desired.

The mailing sack 10 does not need additional sealing tape with backing paper and so on, as any attempts of tampering will be immediately visible, and enables secondary use e.g. for food bags, and composting.

If the shipped item 12 needs to be returned, the sack 10 can be manually closed with tape and shipped back. Likewise, the sack 10 can be reused for the same purpose.

The hybrid material used for the plies 14, 16 of the mailing sack 10 allows for ease and simplicity in consumer recycling and eliminates non-recyclable multi stream formats, so that the sack 10, once used, can be disposed in the standard paper waste stream. The air pockets 28 can be easily deflated by cutting across the sack 10, in order to minimize the volume of this latter in view of disposal.

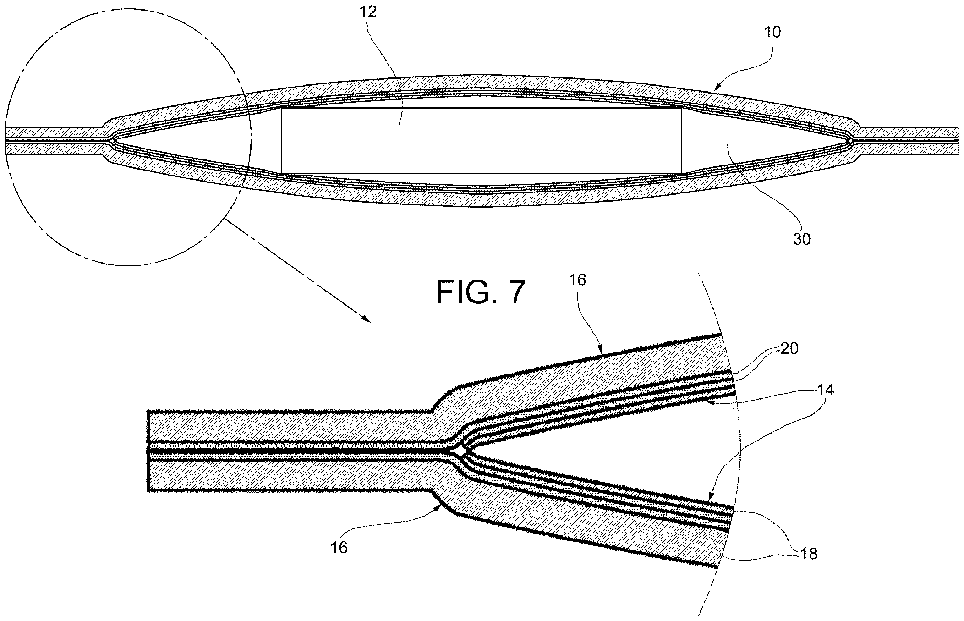

A second embodiment of a mailing sack not according to the present invention is illustrated by Figure 7, wherein the same reference numbers are used to indicate components which are equal or equivalent to the ones disclosed with reference to the previous figures.

The only difference in respect of the mailing sack 10 of the previous embodiment is that no air pockets are created between the inner and outer plies 14, 16 of the facing panels.

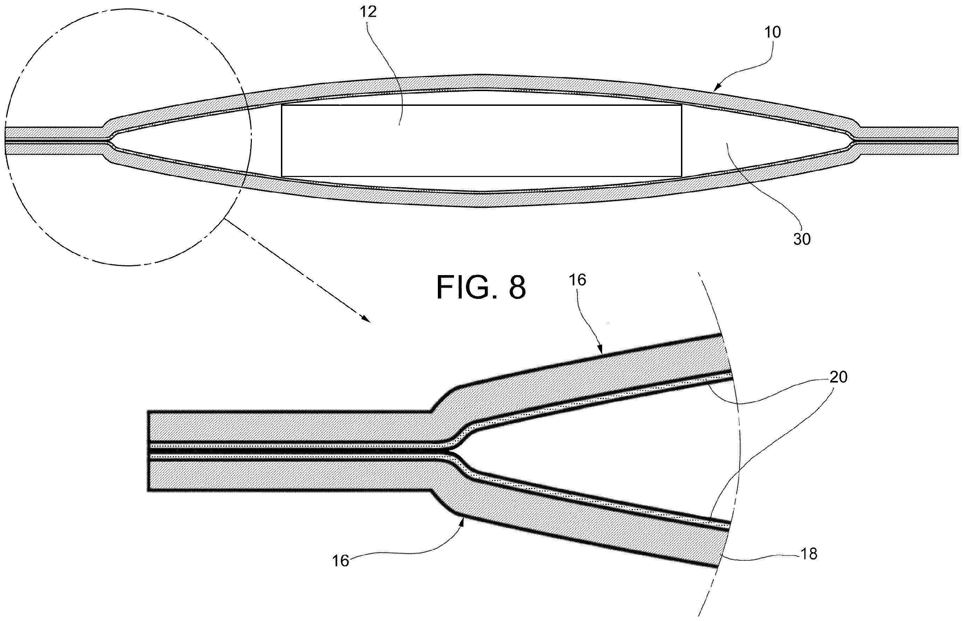

A third embodiment of a mailing sack not according to the present invention is illustrated by Figures 8 and 9, wherein the same reference numbers are used to indicate components which are equal or equivalent to the ones disclosed with reference to the previous figures.

The differences in respect of the mailing sacks 10 of the previous embodiments are that the facing panels have no inner ply 14 and thus no air pockets are created.

Panels constituted solely by the outer ply 16 allow a minimization of the volume by a more extensive extraction of the air surrounding the item 12 prior to final closure sealing (figure 9), which air can be extracted also from the previously disclosed sacks. Alternatively, air can be blown into the above-disclosed sacks, if necessary.

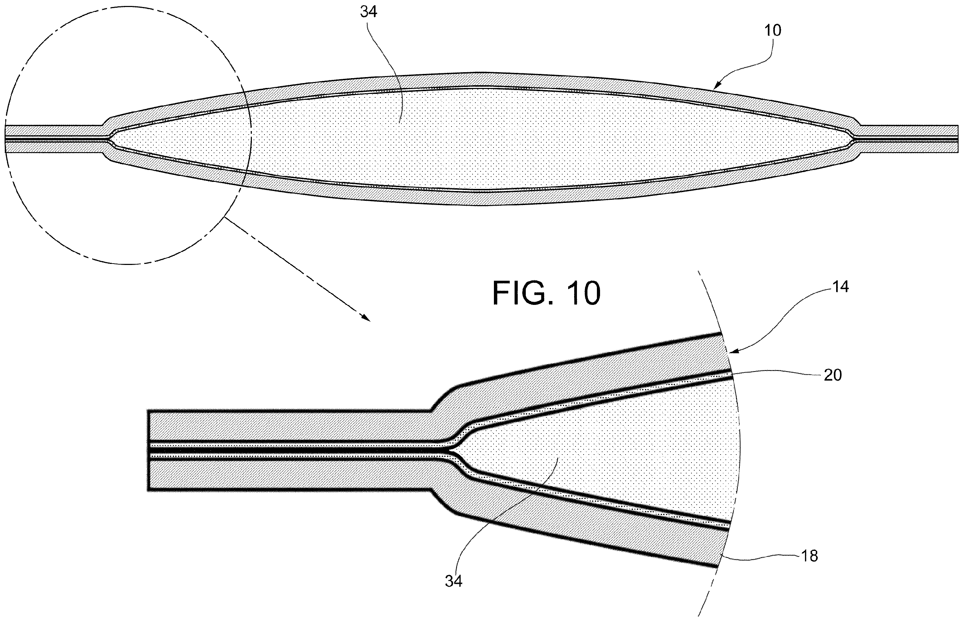

A fourth embodiment of a sack not according to the present invention is illustrated by Figure 10, wherein the same reference numbers are used to indicate components which are equal or equivalent to the ones disclosed with reference to the previous figures.

A first difference in respect of the mailing sacks 10 of the previous embodiments is that no outer ply 16 is used, so that the facing panels are constituted just by the inner ply 14.

Furthermore, prior to the final sealing of the sack 10, air is blown and trapped inside to create a dunnage pillow 34.

The air in the dunnage pillow 34 can be easily released by peeling a not completely closed corner 32 of the sack 10 as described above with reference to figure 4 and without needing any sharp object, unlike conventional air-filled plastic bags.

The above-disclosed different types of sacks 10 may be produced by using a single production line provided of reels 22 of hybrid materials suitable for the inner and outer plies 14, 16, respectively.

The user must solely input into a control unit the type, size and number of the desired sacks and the production line will be fed of the necessary materials by the relevant reel(s). If material replenishment and/or maintenance is required, a notification will be given by the control unit. A splicing system ensures that, if necessary, reels 22 may be changed without interrupting the production. Vice versa, conventional commodities such as glue, backing paper, tape etc. are not required, so that the operation of the production line is quite simplified.

Naturally, the principles of the invention remaining the same, the details of construction and embodiments may be widely varied with respect to those described purely by way of example, without thereby departing from the scope of the invention as set forth in the appended claims.

## Claims

1. Sack (10) for mailing at least one item (12) or for dunnage, formed by two facing panels sealed along the perimeter,
wherein each panel is two-ply with an inner ply (14) and an outer ply (16), wherein said inner ply (14) includes a layer (18) of paper having a grammage 35 to 450 g/m² and a film (20) of an extruded or laminated polymer covering one face of said layer (18) of paper and said outer ply (16) includes a layer (18) of paper having a grammage 35 to 450 g/m² and a film (20) of an extruded or laminated polymer covering one face of said layer (18) of paper, and
wherein a plurality of hermetically sealed individual air pockets (28) are trapped between said inner and outer plies (14, 16).

2. Sack (10) according to claim 1, wherein said polymer is biodegradable.

3. Sack (10) according to any one of the preceding claims, wherein said paper is recycled.

4. Sack (10) according to any one of the preceding claims, wherein said film (20) has a thickness of 3 to 250 µm.

5. Sack (10) according to any one of the preceding claims, which has a substantially rectangular perimeter.

6. Sack (10) according to any one of the preceding claims, wherein one corner (32) of the sack (10) is not completely sealed, so that the two panels are detached and manually peelable in correspondence of said corner (32).

7. Method for producing a mailing sack (10) according to any one of the preceding claims, comprising the steps of:
- creating an envelope formed by two facing panels attached along one side,
- inserting said at least one item (12) between said two facing panels,
- sealing said two facing panels along a perimeter end portion, and
- extracting air (30) trapped between said at least one item (12) and said two facing panels.

## Patentansprüche

1. Beutel (10) zum Versenden mindestens eines Artikels (12) oder als Verpackungsmaterial, gebildet aus zwei einander zugewandten, entlang des Umfangs verschweißten Bahnen,
wobei jede Bahn zweilagig ist, mit einer inneren Lage (14) und einer äußeren Lage (16), wobei die innere Lage (14) eine Schicht (18) aus Papier mit einer Grammatur von 35 bis 450 g/m² und eine Folie (20) aus einem extrudierten oder laminierten Polymer, die eine Seitenfläche der Schicht (18) aus Papier bedeckt, aufweist
und die äußere Lage (16) eine Schicht (18) aus Papier mit einer Grammatur von 35 bis 450 g/m² und eine Folie (20) aus einem extrudierten oder laminierten Polymer, die eine Seitenfläche der Schicht (18) aus Papier bedeckt, aufweist, und
wobei eine Vielzahl hermetisch abgedichteter einzelner Lufttaschen (28) zwischen den inneren und äußeren Lagen (14, 16) eingeschlossen ist.

2. Beutel (10) nach Anspruch 1, wobei das Polymer biologisch abbaubar ist.

3. Beutel (10) nach einem der vorangehenden Ansprüche, wobei das Papier recycelt ist.

4. Beutel (10) nach einem der vorangehenden Ansprüche, wobei die Folie (20) eine Dicke von 3 bis 250 µm hat.

5. Beutel (10) nach einem der vorangehenden Ansprüche, der einen im Wesentlichen rechteckigen Umfang hat.

6. Beutel (10) nach einem der vorangehenden Ansprüche, wobei eine Ecke (32) des Beutels (10) nicht vollständig verschlossen ist, so dass die beiden Bahnen voneinander gelöst und an der Ecke (32) von Hand abziehbar sind.

7. Verfahren zum Herstellen eines Versandbeutels (10) nach einem der vorangehenden Ansprüche, aufweisend die folgenden Schritte:
- Erzeugen eines Umschlags, der aus zwei einander zugewandten Bahnen gebildet ist, die entlang einer Seite befestigt sind,
- Einbringen des mindestens einen Artikels (12) zwischen die beiden einander zugewandten Bahnen,
- Verschließen der beiden einander zugewandten Bahnen entlang eines Umfangs-Endabschnitts, und
- Extrahieren von Luft (30), die zwischen dem mindestens einen Artikel (12) und den beiden einander zugewandten Bahnen eingeschlossen ist.

## Revendications

1. Pochette (10) pour l'envoi postal d'au moins un élément (12) ou pour le fardage, constitué de deux panneaux se faisant face et étant scellés le long du périmètre,
dans laquelle chaque panneau est à deux plis avec un pli intérieur (14) et un pli extérieur (16), dans laquelle ledit pli intérieur (14) comprend une couche (18) de papier ayant un grammage de 35 à 450 g/m² et un film (20) d'un polymère extrudé ou stratifié recouvrant une face de ladite couche (18) de papier et ledit pli extérieur (16) comprend une couche (18) de papier ayant un grammage de 35 à 450 g/m² et un film (20) d'un polymère extrudé ou stratifié recouvrant une face de ladite couche (18) de papier, et
dans laquelle une pluralité de poches d'air individuelles scellées hermétiquement (28) sont piégées entre lesdits plis intérieur et extérieur (14, 16).

2. Pochette (10) selon la revendication 1, dans laquelle ledit polymère est biodégradable.

3. Pochette (10) selon l'une quelconque des revendications précédentes, dans laquelle ledit papier est recyclé.

4. Pochette (10) selon l'une quelconque des revendications précédentes, dans laquelle ledit film (20) a une épaisseur de 3 à 250 µm.

5. Pochette (10) selon l'une quelconque des revendications précédentes, qui a un périmètre sensiblement rectangulaire.

6. Pochette (10) selon l'une quelconque des revendications précédentes, dans laquelle un coin (32) de la pochette (10) n'est pas complètement scellé, de sorte que les deux panneaux soient détachés et manuellement pelables en correspondance avec ledit coin (32).

7. Procédé de production d'une pochette d'envoi postal (10) selon l'une quelconque des revendications précédentes, comprenant les étapes suivantes :
- la création d'une enveloppe constituée de deux panneaux se faisant face et étant attachés le long d'un côté,
- l'insertion dudit au moins un élément (12) entre lesdits deux panneaux se faisant face,
- le scellement desdits deux panneaux se faisant face le long d'une partie d'extrémité de périmètre, et
- l'extraction d'air (30) piégé entre ledit au moins un élément (12) et lesdits deux panneaux se faisant face.
